# EUROPÄISCHE PATENTSCHRIFT

(11) **EP 1 988 369 B1**
(45) Veröffentlichungstag und Bekanntmachung des Hinweises auf die Patenterteilung: **18.11.2009**
(21) Anmeldenummer: 08006355.5
(22) Anmeldetag: 31.03.2008
(51) Int. Cl.: G01D 7/08, G01D 13/24

(54) **Vorrichtung und Verfahren zum Anzeigen von Messwerten sowie Schrumpftunnel für eine Verpackungsmachine bzw. Verpackungsmachine mit einer solchen Vorrichtung**
Device and method for displaying measurements and shrink tunnel for a packaging machine and packaging machine with such a device
Dispositif et procédé d'affichage de valeurs de mesure et tunnel à rétrécissement pour une machine d'emballage ou machine d'emballage dotée d'un tel dispositif

(30) Priorität: 30.04.2007 DE 102007020392
(43) Veröffentlichungstag der Anmeldung: 05.11.2008
(73) Patentinhaber: Multivac Sepp Haggenmüller GmbH & Co. KG, 87787 Wolfertschwenden (DE)
(72) Erfinder: Jokele, Bernd, 87435 Kempten (DE); Moessnang, Konrad, 87435 Kempten (DE)
(74) Vertreter: Grünecker, Kinkeldey, Stockmair & Schwanhäusser Anwaltssozietät

(56) Entgegenhaltungen:
- JP-A- 11 227 714
- NL-C1- 1 013 038
- US-A- 3 377 770
- US-A- 4 472 921
- US-A1- 2004 262 410
- US-A1- 2007 045 444

## Beschreibung

Die vorliegende Erfindung bezieht sich auf eine Vorrichtung und ein Verfahren zum Anzeigen von Messwerten sowie auf einen Schrumpftunnel für eine Verpackungsmaschine bzw. eine Verpackungsmaschine mit einer solchen Vorrichtung.

Zur Anzeige von Messwerten sind analoge Anzeigen und digitale Anzeigen bekannt. Für bestimmte Anwendungen ist es erforderlich, einen Istwert und einen vorgegebenen Sollwert anzuzeigen.

Beispielsweise weist eine Verpackungsmaschine mit integriertem oder angeschlossenem Schrumpftunnel eine Anzeigevorrichtung auf, mit der die in dem Schrumpftunnel herrschende Ist-Temperatur, über eine LED-7-Segmentanzeige angezeigt wird. Möchte der Bediener die Abweichung von einer vorgegebenen Soll-Temperatur erfahren, so muss dazu per Tastendruck auf die Soll-Temperatur umgeschaltet werden. Eine Anzeige einer Abweichung von Ist-Temperatur zu Soll-Temperatur findet nicht statt. Alternativ zu einer LED-7-Segmentanzeige wird bei einer Verpackungsmaschine mit Schrumpftunnel die Temperatur analog angezeigt. Digitale Anzeigen, welche alphanumerische Displays aufweisen, werden in der Regel als reine Textanzeigen verwendet.

Es ist weiter bekannt, die Ist-Temperatur und die Soll-Temperatur voneinander getrennt und beispielsweise nebeneinander liegend anzuzeigen. Eine hohe Abweichung der Ist-Temperatur von der Soll-Temperatur wird durch farbiges Hinterlegen der Ist-Temperatur in der digitalen Anzeige dargestellt.

Bei einer derartigen Anzeigevorrichtung ergibt sich jedoch ein Problem dahingehend, dass bei schneller Erhöhung des Istwerts aufgrund der Geschwindigkeit der Werterhöhung der in einer numerischen Anzeige dargestellte Wert nur schwer ablesbar ist. Gleiches gilt auch für die Abweichung des Istwerts vom Sollwert, die sich mit der gleichen Geschwindigkeit ändert.

In der US2007/0045444 ist ein digitales Thermostat gezeigt, das einen Benutzeranzeigeschirm aufweist, wobei die Thermostatanzeige einen Temperaturprogrammierschirm auf dem Benutzeranzeigeschirm anzeigt. Dieser enthält eine Temperatursollwertlinie, ein digitales Umgebungstemperatursymbol, das in der Nähe der Temperatursollwertlinie an einer Position zur Anzeige der erfassten Umgebungstemperatur positioniert ist, und zumindest ein digitales Temperatursollwertsymbol, das in der Nähe der Temperatursollwertlinie an einer Position zur Anzeige von mindestens einem benutzerprogrammierten Temperatursollwert positioniert ist.

Es ist Aufgabe der Erfindung, eine Vorrichtung und ein Verfahren zum Anzeigen von Messwerten sowie einen Schrumpftunnel für eine Verpackungsmaschine bzw. eine Verpackungsmaschine mit einer solchen Vorrichtung bereitzustellen, die die oben genannten Nachteile vermeidet und eine schnelle und zuverlässige Erfassung der Anzeige ermöglicht.

Die Aufgabe wird gelöst durch eine Vorrichtung nach Anspruch 1, durch ein Verfahren nach Anspruch 7, einen Schrumpftunnel nach Anspruch 11 und eine Verpackungsmaschine nach Anspruch 13.

Weiterbildungen der Erfindung sind in den Unteransprüchen angegeben.

Bei der erfindungsgemäßen Vorrichtung und dem Verfahren kann durch die Verknüpfung des numerischen Messwertes mit der Ortskoordinate, an der er angezeigt wird, allein von der Position der Ziffern, die den Messwert wiedergeben, abgelesen werden, wie hoch der Messwert ist. Die Geschwindigkeit der örtlichen Bewegung des Messwerts entspricht damit der Geschwindigkeit der Veränderung des Messwerts im Laufe der Zeit. Damit wird der Vorteil einer digitalen Anzeige, der in der hohen Ablesegenauigkeit besteht, mit dem Vorteil einer analogen Anzeige, der in der schnellen Erfassung der Anzeige besteht, verknüpft. Die Anzeigevorrichtung bietet nicht nur bei schneller Änderung des Istwerts sondern auch bei langsamer Änderung einen Vorteil hinsichtlich der visuellen Erkennbarkeit.

Weitere Merkmale und Zweckmäßigkeiten der Erfindung ergeben sich aus der Beschreibung von Ausführungsbeispielen anhand der Figuren. Von den Figuren zeigen:
- Fig.1: eine schematische Darstellung einer Verpackungsmaschine mit einem Schrumpftunnel mit erfindungsgemäßer Vorrichtung zur Anzeige eines Messwerts;
- Fig. 2a: eine schematische Ansicht einer ersten Ausführungsform der Vorrichtung zur Anzeige von Messwerten;
- Fig. 2b: eine schematische Ansicht einer zweiten Ausführungsform der Vorrichtung zur Anzeige von Messwerten;
- Fig. 2c: eine schematische Ansicht einer dritten Ausführungsform;
- Fig. 3 (a - d): weitere Ausführungsbeispiele für die Steuerung der Anzeigevorrichtung;
- Fig. 4: eine schematische Ansicht der Steuerung der Anzeigevorrichtung; und
- Fig. 5: ein weiteres Beispiel einer Verpackungsmaschine.

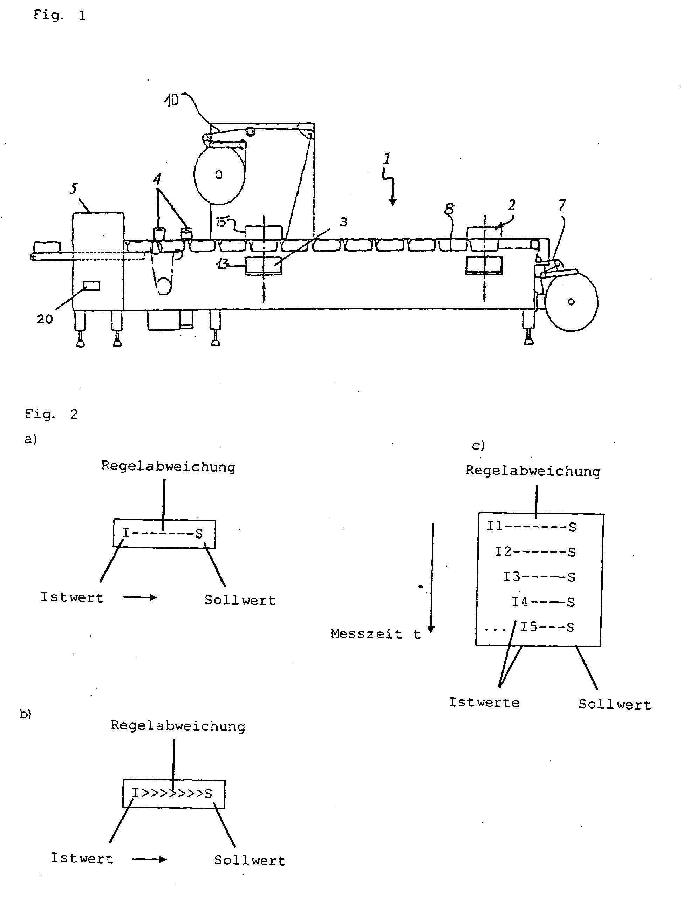

Im Folgenden wird mit Bezug auf Fig.1 und Fig.2 eine Verpackungsmaschine mit der erfindungsgemäßen Vorrichtung zur Anzeige der Temperatur beschrieben.

Wie aus Fig. 1 ersichtlich ist, umfasst die beispielhaft dargestellte Verpackungsmaschine 1 eine Form- bzw. Tiefziehstation 2, eine Evakuier- und Versiegelungsstation 3, eine Schneidstation 4 und einen Schrumpftunnel 5. Eingangsseitig ist eine Zuführung für eine Unterfolie 7 vorgesehen, die von der Eingangsseite her durch die Stationen bis zum ausgangsseitigen Ende geführt wird. In bekannter Weise erfolgt in der Formstation 2 durch Tiefziehen ein Formen von Behältnissen 8. Diese werden nachfolgend mit dem zu verpackenden Gut gefüllt. Vor dem Eingang zur Evakuier- und Versiegelungsstation 3 wird eine Oberfolie 10 vor dem Eingang zur Evakuier- und Versiegelungsstation 3 auf die Oberseite der Unterfolie 7, quasi als Deckel für die Behältnisse 8, zugeführt. Die Oberfolie 10 ist beispielsweise als Schrumpffolie ausgebildet. Alternativ können auch die Oberfolie und die Unterfolie als Schrumpffolie ausgebildet sein.

In der Evakuier- und Versiegelungsstation 3 wird die tiefgezogene Packung evakuiert und versiegelt. Nach dem Vereinzeln in der Schneidstation 4 wird die versiegelte Packung in dem Schrumpftunnel 5 erwärmt, so dass die Oberfolie 10 schrumpft und sich eng an das Gut anlegt. Der Schrumpftunnel 5 weist eine (nicht dargestellte) Heizeinrichtung auf, die die Packung mit Wärme beaufschlagt. Diese kann als Kontaktheizfläche oder auch als Strahlungsheizfläche ausgebildet sein. Der Schrumpftunnel kann auch als Schrumpftank mit einem Wasservorhang oder einem Wasserbad, in dem sich die Packung befindet, ausgebildet sein.

Die Heizeinrichtung weist eine Steuerung auf, mit der die Heizeinrichtung derart gesteuert wird, dass eine vorgegebene Soll-Temperatur S eingestellt wird.

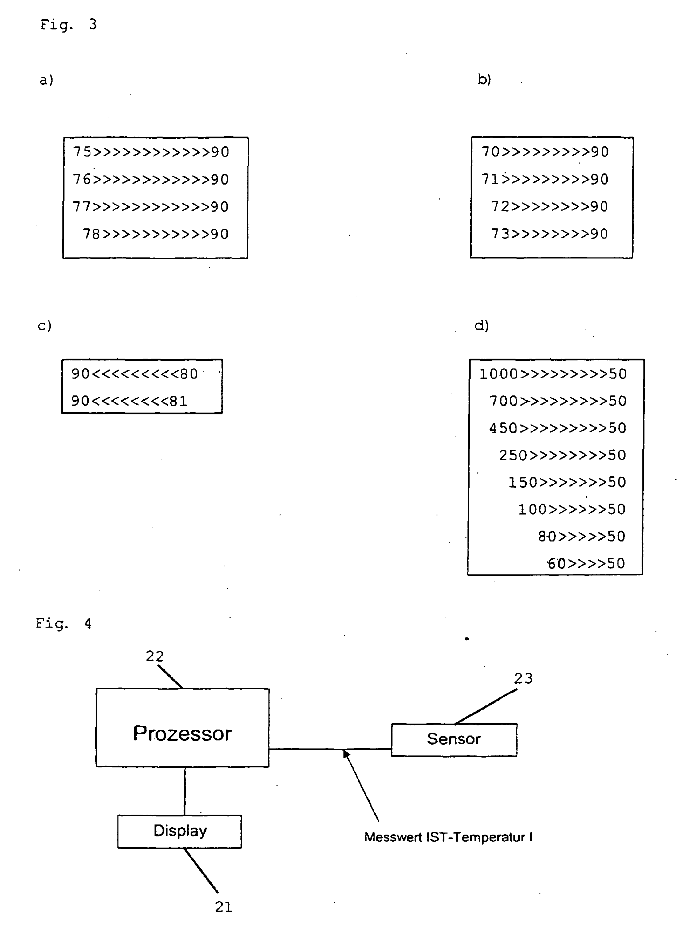

An dem Schrumpftunnel 5 ist eine Vorrichtung 20 zum Anzeigen der herrschenden Temperatur in dem Schrumpftunnel vorgesehen. Die Vorrichtung 20 weist ein Display 21 auf, welches, wie aus Fig. 4 ersichtlich ist, mit einem Prozessor 22 verbunden ist, der seinerseits mit einem Sensor 23 verbunden ist. Der Sensor 23 erfasst die Ist-Temperatur I in dem Schrumpftunnel.

Die Steuerung 22, die beispielsweise ein Mikroprozessor ist, ist so ausgebildet, dass die Ist-Temperatur I.vom Sensor 23 erfasst wird und mit einem vorgegebenen und in dem Mikroprozessor gespeicherten Sollwert S verglichen wird und sodann eine Regelabweichung R = Sollwert - Istwert bestimmt wird.

Wie aus Fig. 2 ersichtlich ist, ist das Display 21 beispielsweise als graphikfähiges LCD-Display ausgebildet. Das Display 21 wird von der Steuerung 22 angesteuert. Gemäß einer ersten in Fig. 2a gezeigten Ausführungsform ist die Steuerung so ausgebildet, dass der vorgegebene Sollwert S in Draufsicht in der Nähe des rechten Randes des Displays angezeigt wird und der erfasste Istwert I zu Beginn der Messwerterfassung in der Nähe des linken Randes angezeigt wird. Der örtliche Abstand des angezeigten Istwerts I vom Sollwert S entspricht einer Regelabweichung zum Messzeitpunkt t. Im zeitlichen Verlauf der Messwerterfassung ändert sich der Abstand des Istwerts vom Sollwert entsprechend der ermittelten Regelabweichung zum jeweiligen Messzeitpunkt. Der Istwert wandert im Laufe der Messung auf den Sollwert zu. So wird gleichzeitig der istwert sowie die Regelabweichung visuell dargestellt, was eine besonders präzise und schnelle Erfassung, nicht nur mit dem Auge, sondern auch mit angeschlossenen Überwachungsgeräten, beispielsweise einer CCD-Kamera erlaubt. Hat der Istwert den Sollwert erreicht, so fallen beide Werte auf dem Display zusammen und werden als ein Wert dargestellt.

Die Steuerung ist ferner so ausgebildet, dass die Geschwindigkeit, mit der sich die erfasste Regelabweichung des Istwerts von dem Sollwert ändert, der Bewegungsgeschwindigkeit der alphanumerischen Anzeige des Istwerts entspricht.

Wie in Fig. 2b dargestellt ist, wird gemäß einer bevorzugten Ausführungsform der Abstand zwischen der Anzeige des Istwerts und des Sollwerts mit Pfeilen symbolisiert, deren Pfeilrichtung die Richtung der Änderung der Regelabweichung anzeigt.

In einer weiteren Ausführungsform, die in Fig. 2c) gezeigt ist, ist die Steuerung und das Display so ausgebildet, dass die zeitliche Änderung der Regelabweichung in untereinander folgenden Zeilen des Displays angezeigt wird. Zum Zeitpunkt t₁ wird die erste Zeile mit einem Meßwert I₁ dargestellt, zum Zeitpunkt tᵢ die i-te Zeile mit einem Meßwert Iᵢ.

Die Anzahl der Zeichen auf dem Display zwischen der Darstellung der Zahl des Istwerts und der Zahl des Sollwerts entspricht Bruchteilen des Werts der Regelabweichung. Jedes Symbol, im dargestelltem Beispiel jeder Pfeil entspricht somit einem Temperaturintervall. Es können beliebige Symbole verwendet werden, beispielsweise kann die Steuerung auch so ausgebildet sein, dass für bestimmte Temperaturintervalle bestimmte Symbole verwendet werden.

Weitere Abwandlungen sind in Fig. 3a) - Fig. 3c) am Beispiel einer Temperaturerfassung in der Einheit °Celsius gezeigt. In Fig. 3a) ist die Steuerung so ausgebildet, dass der Istwert I an der Stelle bleibt, wenn die Regelabweichung größer ist, als eine vorgegebene Regelabweichung. Der dargestellte Wert verändert sich jedoch entsprechend dem Messwert. Sobald der Istwert weniger als die vorgegebene Regelabweichung vom Sollwert entfernt ist, bewegt sich der Istwert im Laufe der Messzeit auf den Sollwert zu.

In Fig. 3b) symbolisiert ein Pfeil eine Regelabweichung von 2°Celsius. Erst wenn die Änderung der Regelabweichung 2°Celsius oder mehr beträgt erfolgt eine Ortsverschiebung des Istwerts.

In einer weiteren, in Fig. 3c) gezeigten Anwandlung steht der Sollwert links und der Istwert bewegt sich von rechts her auf den Sollwert zu.

In einer weiteren, in Fig. 3d) gezeigten Abwandlung ist die Regelabweichung logarithmisch dargestellt, indem sich der Abstand zwischen Istwert und Sollwert logarithmisch ändert. Die Abweichung kann auch durch andere nichtlineare Darstellungen angezeigt werden.

Im Betrieb wird in dem dargestellten Ausführungsbeispiel eine vorgegebene Soll-Temperatur für den Schrumpftunnel eingestellt. Dann wird die Ist-Temperatur erfasst und die Abweichung der Ist-Temperatur von der Soll-Temperatur auf dem Display wie zuvor beschrieben dargestellt. Wenn die Soll-Temperatur erreicht ist, fallen beide Werte zusammen. Die Packung verweilt dann für eine vorgegebene Zeit in dem Schrumpftunnel, so dass ein Schrumpfen der Folie erfolgt.

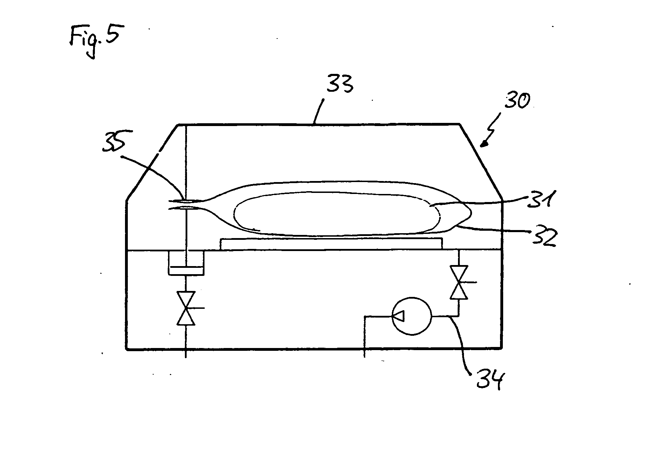

In Fig. 5 ist schematisch ein weiteres Beispiel einer Verpackungsmaschine in Form einer Kammermaschine 30 dargestellt.
Das zu verpackende Gut 31 ist in einem Beutel 32 vorgesehen, der in der Kammer 33 der Maschine über eine Evakuiervorrichtung 34 evakuiert und über eine Siegelvorrichtung 35 in Form von Siegelschienen versiegelt wird. Falls erforderlich wird der Beutel vor dem Versiegeln mit einem Gas befüllt. Sowohl der Verlauf des Vakuums beim Evakuieren, als auch die Temperatur der Siegelschiene kann mit der erfindungsgemäßen Anzeigevorrichtung dargestellt werden. Aufgrund der hohen Anforderungen an die Qualität der Verpackung, insbesondere der Siegelnaht, bei der Verpackung von medizinischen Gütern, ist eine präzize und leicht erfaßbare Anzeige erfoderlich.Diese wird durch die erfindungsgemäße Anzeigevorrichtung gewährleistet.

Der in der Beschreibung verwendete Begriff Sollwert umfasst auch beliebige andere vorgegebene Werte, insbesondere kann der Sollwert selbst auch ein Messwert sein.

Die Erfindung ist nicht auf das dargestellte Ausführungsbeispiel beschränkt. Die Vorrichtung zur Anzeige von Messwerten kann für beliebige Messwerte, beispielsweise Druck, Temperatur, Feuchtigkeit etc. verwendet werden. Die Anwendung ist nicht auf die Anwendung in einer Verpackungsmaschine beschränkt. Außerdem kann die Anzeigevorrichtung mehrfach Verwendung in einer Verpackungsmaschine finden, beispielsweise bei der Anzeige der Temperatur in der Evakuier- und Siegelstation, bei der Anzeige eines Füllstandes beim Befüllen des Produkts etc. Zum Beispiel kann auch in der Evakuier- und Siegelstation einer Tiefziehmaschine der Unterdruck beim Siegelvorgäng und/oder bei einem Begasungsvorgang der Druck des Bagasungsgases wie O₂, N₂ oder CO₂ angezeigt werden.

Das Display kann auch anders ausgebildet sein. Beispielsweise kann anstelle eines graphikfähigen LCD-Displays eine LED-Zeile verwendet werden.

## Patentansprüche

1. Vorrichtung zum Anzeigen von Messwerten mit einer Steuereinheit (22) und
einer digitalen Anzeigeeinheit (21), die von der Steuereinheit (22) angesteuert wird, wobei
die Steuereinheit (22) derart ausgebildet ist, dass ein von der Messwerterfassungseinheit erfasster Messwert als Istwert (I) und ein vorgegebener Sollwert (S) auf der Anzeigeeinheit (21) derart dargestellt werden, dass die Position des Istwerts (I) relativ zu dem Sollwert (S) eine Funktion der Differenz zwischen dem Sollwert und dem Istwert ist, wobei zwischen der Darstellung des Istwerts und der Darstellung des Sollwerts grafische Elemente eingefügt sind, beispielsweise Pfeile, die die Richtung der Änderung der Differenz zwischen Istwert und Sollwert anzeigen.

2. Vorrichtung nach Anspruch 1, **dadurch gekennzeichnet, dass** die Steuerung (22) so ausgebildet ist, dass sich der Abstand zwischen dem auf der Anzeigevorrichtung (21) dargestellten Istwert zu dem dargestellten Sollwert entsprechend der Differenz zwischen Sollwert und Istwert zeitlich ändert.

3. Vorrichtung nach Anspruch 2, **dadurch gekennzeichnet, dass** die Steuerung (22) so ausgebildet ist, dass der Istwert sich in einer Zeile der Anzeigevorrichtung auf den Sollwert zubewegt oder von dem Sollwert wegbewegt entsprechend der Differenz zwischen Sollwert und Istwert zum Zeitpunkt der Erfassung.

4. Vorrichtung nach Anspruch 2 oder 3, **dadurch gekennzeichnet, dass** die Steuerung so ausgebildet ist, dass die Bewegung des Istwerts relativ zu dem Sollwert in einer Zeile oder in mehreren Zeilen der Anzeigevorrichtung stattfindet.

5. Vorrichtung nach einem der Ansprüche 1 bis 4, **dadurch gekennzeichnet, dass** die Steuerung so ausgebildet ist, dass die Darstellung des Istwerts und des Sollwerts bei einer Differenz zwischen Sollwert und Istwert von null zusammenfällt.

6. Verfahren zum Anzeigen von Messwerten, wobei ein Messwert, der von einer Messwerterfassungsvorrichtung erfasst worden ist, als Istwert (I) und ein Sollwert (S) digital dargestellt werden, wobei die Position des Istwerts relativ zu dem Sollwert als Funktion der Differenz zwischen Istwert und Sollwert dargestellt wird, wobei
zwischen dem Istwert und dem Sollwert grafische Symbole angeordnet sind, die die Richtung der Änderung der Differenz zwischen Sollwert und Istwert kennzeichnen.

7. Verfahren nach Anspruch 6, **dadurch gekennzeichnet, dass** der örtliche Abstand zwischen dem Istwert und dem Sollwert entsprechend der Differenz zwischen dem Istwert und dem Sollwert ist.

8. Verfahren nach Anspruch 7, **dadurch gekennzeichnet, dass** sich der Abstand zeitlich entsprechend dem zu einem Zeitpunkt erfassten Istwert ändert.

9. Schrumpftunnel für eine Verpackungsmaschine, insbesondere für eine Tiefziehmaschine mit einer Vorrichtung zum Anzeigen von Messwerten nach einem der Ansprüche 1 bis 5.

10. Schrumpftunnel nach Anspruch 9, wobei eine Temperaturmesseinrichtung vorgesehen ist und die Vorrichtung Temperaturwerte anzeigt.

11. Verpackungsmaschine mit einer Vorrichtung zum Anzeigen von Messwerten nach einem der Ansprüche 1 bis 5.

12. Verpackungsmaschine nach Anspruch 11, wobei es sich um eine Tiefziehmaschine oder eine Kammermaschine handelt.

## Claims

1. Device for displaying measured values with a control unit (22) and
a digital display unit (21), which is controlled by the control unit (22), wherein
the control unit (22) is formed such that a measured value detected by the detection unit for measured values as an actual value (I) and a predetermined set value (S) are represented on the display unit (21) such that the position of the actual value (I), with respect to the set value (S), is a function of the difference between the set value and the actual value, wherein graphical elements, for example arrows, displaying the direction of the change of the difference between the actual value and the set value, are inserted between the representation of the actual value and the representation of the set value.

2. Device according to claim 1, **characterized in that** the control (22) is formed such that the distance between the actual value represented on the display device (21) with respect to the represented set value changes over time according to the difference between set value and actual value.

3. Device according to claim 2, **characterized in that** the control (22) is formed such that the actual value moves toward the set value or moves away from the set value in one line of the display device, according to the difference between set value and actual value at the time of detection.

4. Device according to claim 2 or 3, **characterized in that** the control is formed such that the movement of the actual value with respect to the set value takes place in one line or in a plurality of lines of the display device.

5. Device according to any of claims 1 to 4, **characterized in that** the control is formed such that the representation of the actual value and the set value coincides at a difference of zero between set value and actual value.

6. Method for displaying measured values, wherein a measured value, detected by a detection device for measured values as an actual value (I), and a set value (S) are represented digitally, wherein the position of the actual value with respect to the set value is represented as a function of the difference between actual value and set value, wherein graphical symbols are arranged between the actual value and the set value, characterizing the direction of the change of the difference between set value and actual value.

7. Method according to claim 6, **characterized in that** the spatial distance between the actual value and the set value is in accordance with the difference between the actual value and the set value.

8. Method according to claim 7, **characterized in that** the distance changes over time according to the actual value detected at an instant.

9. Shrink tunnel for a packaging machine, particularly for a deep drawing machine with a device for displaying measured values according to any of the claims 1 to 5.

10. Shrink tunnel according to claim 9, wherein a unit for temperature measurement is provided and the device displays temperature values.

11. Packaging machine with a device for displaying measured values according to any of the claims 1 to 5.

12. Packaging machine according to claim 11, wherein a deep drawing machine or a chamber machine are concerned.

## Revendications

1. Dispositif d'affichage de valeurs de mesure comportant :
- une unité de commande, et
- une unité d'affichage numérique (21) commandées par l'unité de commande (22),
l'unité de commande (22) est réalisée pour qu'une valeur de mesure saisie par l'unité de saisie de valeurs de mesure soit affichée comme valeur réelle (I) et qu'une valeur de consigne (S) prédéfinie soit affichée sur l'unité d'affichage (21) de façon que la position de la valeur réelle (I) par rapport à la valeur de consigne (S) soit une fonction de la différence entre la valeur de consigne et la valeur réelle,
et entre la représentation de la valeur réelle et la représentation de la valeur de consigne on insère des éléments graphiques par exemple des flèches qui indiquent la direction de la variation de la différence entre la valeur réelle et la valeur de consigne.

2. Dispositif selon la revendication 1,
**caractérisé en ce que**
la commande (22) est réalisée pour que la distance entre la valeur réelle représentée sur le dispositif d'affichage (21) par rapport à la valeur de consigne, représentée, varie en fonction de la différence entre la valeur de consigne et la valeur réelle.

3. Dispositif selon la revendication 2,
**caractérisé en ce que**
la commande (22) est réalisée pour que la valeur réelle se déplace dans une ligne du dispositif d'affichage vers la valeur de consigne ou s'écarte de la valeur de consigne en fonction de la différence entre la valeur de consigne et la valeur réelle à l'instant de la saisie.

4. Dispositif selon la revendication 2 ou 3,
**caractérisé en ce que**
la commande est réalisée pour que le mouvement de la valeur réelle par rapport à la valeur de consigne se produise dans une ou plusieurs ligne du dispositif d'affichage.

5. Dispositif selon la revendication 1 à 4,
**caractérisé en ce que**
la commande est conçue pour que la représentation de la valeur réelle et celle de la valeur de consigne coïncident lors que la différence entre la valeur de consigne et la valeur réelle est égale à zéro.

6. Procédé d'affichage de valeur de mesure selon lequel on saisi une valeur de mesure par le dispositif de saisie de valeur de mesure, on la représente comme valeur réelle (I) en même temps qu'une valeur de consigne (S), selon une représentation numérique,
la position de la valeur réelle par rapport à la valeur de consigne étant représentée comme fonction de la différence entre la valeur réelle et la valeur de consigne et
a des symboles graphiques entre la valeur réelle et la valeur de consigne caractérisent la direction de la variation de la différence entre la valeur de consigne et la valeur réelle.

7. Procédé selon la revendication 6,
**caractérisé en ce que**
la distance locale entre la valeur réelle et la valeur de consigne correspond à la différence entre la valeur réelle et la valeur de consigne.

8. Procédé selon la revendication 7,
**caractérisé en ce que**
la distance varie dans le temps en fonction de la valeur réelle saisie à un instant.

9. Tunnel de rétraction pour une machine d'emballage notamment pour une machine d'emboutissage profond comportant un dispositif d'affichage des valeurs de mesure selon l'une des revendications 1 à 5.

10. Tunnel de rétraction selon la revendication 9,
**caractérisé par**
une installation de mesure de la température et le dispositif affiche les valeurs de températures.

11. Machine d'emballage comportant un dispositif d'affichage des valeurs de mesure selon l'une des revendications 1 à 5.

12. Machine d'emballage selon la revendication 11,
**caractérisé en ce qu'**
il s'agit d'une machine d'emboutissage profond ou d'une machine à chambre.
